# EUROPEAN PATENT APPLICATION

(11) **EP 4 644 117 A1**
(43) Date of publication of application: **05.11.2025**
(21) Application number: 24173963.0
(22) Date of filing: 02.05.2024
(51) Int. Cl.: B32B 17/10

(54) **LAMINATED GLASS FOR DEPLOYABLE ROLLOVER PROTECTION SYSTEMS**

(71) Applicant: Kuraray Europe GmbH, 65795 Hattersheim (DE)
(72) Inventor: Karpinski, Andreas, Odenthal (DE); Klee, Henrik, Düsseldorf (DE)
(74) Representative: Janßen, Christian Oliver

(57) **Abstract**

The invention is directed to a deployable rollover protection system with a laminated glazing comprising two sheets of glass combined by an adhesive film and at least one rollbar deployable through the laminated glazing **characterized in that** at least one deployment area A1 of the laminated glazing through which the at least one rollbar is deployed has different mechanical properties than the non-deployment areas A2 of the laminated glazing.

## Description

The invention is directed to a process to produce laminated glass provided with areas of different mechanical properties due to the use of an interlayer film having different mechanical properties.

The use of laminated glass i.e. two sheets of glass glued together by an interlayer film for windscreen and side lights in cars is a long standing industrial standard. It is well known what chemical composition of the interlayer film provides the laminated glass with what mechanical properties.

It is further a long-standing industrial standard to adjust the mechanical strength and the adhesion of the interlayer film to provide a laminated glass having a balanced mechanical strength to prevent penetration of an object on one side but to give way on impact of a pedestrian on the other side. The mechanical strength of a windscreen is measured as HIC "head injury criterion". A typical interlayer for this purpose is disclosed in EP1800855.

By adjustment of the mechanical strength of the interlayer, its sound damping properties can be adjusted. Since softer interlayers have better sound damping properties than harder interlayera, multi-layer interlayer films have been developed that comprise soft and hard layers. Such films combine good overall mechanical strength with good sound dampening.

The advantage of such films can in certain applications be a disadvantage, namely if the laminated glass needs to be penetrated by a safety device: some cars (esp. convertibles) are equipped with a deployable rollover protection system wherein the laminated glazing is penetrated by at least one rollbar, thereby protecting passengers during a rollover of the car. In such an event, the rollbars need to be deployed through the laminated glazing as quickly and as reliably as possible. Interlayers providing a too high mechanical resistance would in worst case prevent that, at least it would require additional effort.

Object of the present invention is therefore a deployable rollover protection system with a laminated glazing comprising two sheets of glass combined by an adhesive film and at least one rollbar deployable through the laminated glazing **characterized in that** at least one deployment area A1 of the laminated glazing through which the at least one rollbar is deployed has different mechanical properties than the non-deployment areas A2 of the laminated glazing.

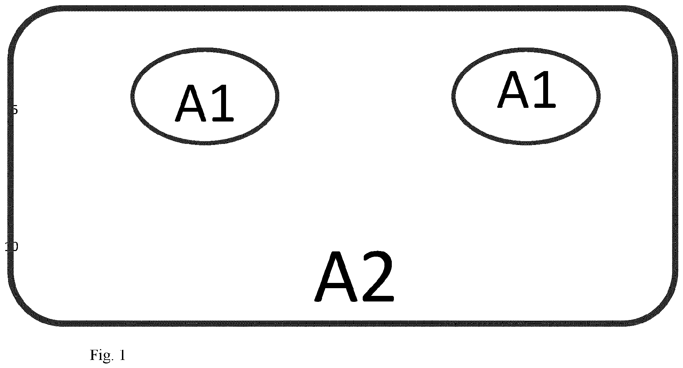

Fig. 1 shows schematically the adhesive film with two deployment areas A1 embedded in non-deployment area A2. The laminated glazing used in the deployable rollover protection system of the invention is preferable a rear window of a car.

In general, the number of deployment areas A1 is not limited, but in practice 1 -3 rollbar deployable through the laminated glazing and accordingly 1-3 deployment areas A1 are sufficient. The rollbar deployable through the laminated glazing itself can be anything capable of supporting the full weight of the car like a steal bar.

The at least one rollbar may be deployed through the laminated glazing by a release system comprising a spring, an explosive charge, pneumatic means or hydraulic means.

Further object of the invention is a method of producing the adhesive film for a deployable rollover protection system according to the invention **characterized by** producing a first adhesive film with areas of non-deployment A1 and areas of deployment A2 with identical mechanical properties and exchanging the areas of deployment A1 of the first adhesive film with a second adhesive film having different identical mechanical properties.

The different mechanical properties of the areas of deployment of the at least one rollbar through the laminated glazing may be provided by different mechanical properties of the adhesive film in the deployment areas A1 as compared to the non-deployment areas A2.

The interlayer film provided for the laminated glazing should have all the necessary mechanical properties and adhesion for this application. This includes certain storage modulus G' (usually measured at 1 Hz, 3 K/min and 50 °C), certain storage modulus G', pummel values and HIC (head injury criteria), which are all known to the person skilled in the art. For example, suitable films for the windscreen area have preferably a glass-transition temperature Tg measured according to the method described below from 48 °C to 95 °C, more preferably from 50 °C to 90 °C, even more preferably from 55 °C to 85 °C and most preferably from 60 °C to 75 °C. and /or a storage modulus G' at 1 Hz, 3 K/min and 50 °C measured according to the method described below from 10 to 750 MPa, more preferably from 20 to 600 MPa, and most preferably from 50 to 550 MPa.

In a first embodiment, the areas of deployment A1 of the at least one rollbar through the laminated glazing differ in mechanical properties by at least 10% in stiffness as compared to the non-deployment areas A2 wherein the mechanical properties are defined as average storage modulus G' at 1 Hz, 3 K/min and 50 °C measured according to the method described in the description and wherein the average storage modulus G' of the areas of deployment A1 is at least 10% higher than the average storage modulus G' of the areas of non-deployment A2.

In a second embodiment, the average glass-transition temperature Tg of the areas of deployment A1 measured according to the method described in the description is at least 10% higher than the average Tg the areas of non-deployment A2.

The different mechanical properties of the areas A1 and A2 can be adjusted by either by adjusting the composition of the adhesive film in these areas or by adjusting the adhesion of the film to the glass sheets.

The general composition of the layers should comply with the standard recipes of interlayer films and is known to the person skilled in the art.

The adhesive film may comprise in the areas A1 and A2 the same polyvinyl acetal resin and the same plasticizers, wherein the plasticizer content in the areas A1 and A2 is different. Different plasticizer content in the areas will result in different mechanical properties.

In a first variant of the invention, the adhesive film comprises at least one polyvinyl acetal resin and at least one plasticizer and wherein the plasticizer content in the areas of deployment A1 and areas of non-deployment A2 of the adhesive film is different.

In a second variant of the invention, the adhesive film comprises at least one polyvinyl acetal resin and at least one plasticizer and wherein the plasticizer content in the areas of deployment A1 is lower than in the areas of non-deployment A2.

In the following, some general guidelines on the composition of the adhesive film are outlined:
The different areas may contain one or more plasticizers that are common in this technical field and are known to the person skilled in the art. One or more plasticizers are particularly preferable, selected from the group of di-2-ethylhexyl sebacate, 1,2 cyclohexane dicarboxylic acid diisononyl ester, di-2-ethylhexyl adipate, di-2-ethylhexyl phthalate, dioctyl adipate, dihexyl adipate, dibutyl sebacate, di-2-butoxyethyl sebacate, triethyleneglycol-bis-2-ethylhexanoate, triethyleneglycol-bis-n-heptanoate, triethyleneglycol-bis-n-hexanoate, tetraethyleneglycol-bis-n-heptanoate, di-2-butoxyethyl adipate, di-2-butoxyethoxyethyl adipate.

In the present invention, polyvinyl butyral is preferable used as polyvinyl acetal having an average degree of acetalisation preferably not less than 40 mol%, more preferably not less than 50 mol%.

The average degree of acetalisation of the polyvinyl butyral resin in the areas is preferably not more than 90 mol%, more preferably not more than 80 mol%.

The average vinyl acetate unit content of the polyvinyl butyral resin is preferably not more than 30 mol%, more preferably not more than 20 mol%.

The lower limit of the average content of the vinyl acetate units is not limited but is usually not less than 0.1 mol%.

The average content of vinyl alcohol units of the polyvinyl butyral resin is preferably not less than 5 mol%, more preferably not less than 15 mol%.

The average content of vinyl alcohol units of the polyvinyl butyral resin is preferably not more than 50 mol%, more preferably not more than 40 mol%.

In a similar way as the mechanical properties, the adhesion of the areas A1 and A2 to at least one glass sheet may be adjusted such that the adhesive film has in the deployment areas A1 a different adhesion level to at least one sheet of glass than in the non-deployment areas.

The different adhesion of the adhesive film in the deployment areas A1 can be provided by coating or printing the surface of the adhesive film with a compound affecting the adhesion to glass. Such compounds are for example polyvinyl alcohol, silane compounds and alkaline /alkali earth metal salts.

As known to the person skilled in the art, adhesion of interlayer films to glass can be adjusted by adding salts of alkali metals and/or alkali earth metals. In general, the total amount of alkali metal salts may be as low as 0.005 % by weight based on the total weight of the interlayer film (per area). Preferred ranges of alkali metal salt are 0.01 % - 0.1 %; 0.02 - 0.08 %; 0.03 - 0.06 %, each weight % based on the total weight of the interlayer film. The interlayer film may further 0 to 100 ppm alkaline earth ions, preferably 10 to 50 ppm.

### Measurement methods for Storage modulus G' and glass transition temperature Tg

Storage modulus G' and loss factor tan δ were measured using a Anton Paar MCR 302 rheometer and a plate/ plate geometry (diameter: 8 mm). The frequency was set to 1 Hz and the heating rate to 3 K/min. The measurements were performed in the linear range of deformation between -20 and +150 °C. The glass transition temperature was taken from the tan δ maximum.

PET release film between the glass and the PVB interlayer was used during the autoclave cycle to prepare the film. After the autoclave process, the release film and glass were removed and the PVB sheet was pre-dried at 65 °C for 24 h before performing the mechanical tests.

### Measurement methods for the PVOH and PVAc content

The polyvinyl alcohol content and polyvinyl acetate content of PVB were determined in accordance with ASTM D 1396-92. The degree of acetalisation (= acetal/butyral content) can be calculated as the remaining portion from the sum of polyvinyl alcohol content and polyvinyl acetate content determined in accordance with ASTM D 1396-92 needed to make one hundred. Conversion from % by weight into mol % is achieved by formulas known to the person skilled in the art.

## Claims

1. Deployable rollover protection system with a laminated glazing comprising two sheets of glass combined by an adhesive film and at least one rollbar deployable through the laminated glazing **characterized in that** at least one deployment area A1 of the laminated glazing through which the at least one rollbar is deployed has different mechanical properties than the non-deployment areas A2 of the laminated glazing.

2. Deployable rollover protection systems according to claim 1 **characterized in that** different mechanical properties of the areas of deployment of the at least one rollbar through the laminated glazing are provided by different mechanical properties of the adhesive film in the deployment areas A1 as compared to the non-deployment areas A2.

3. Deployable rollover protection systems according to claim 1 or 2 **characterized in that** the areas of deployment A1 of the at least one rollbar through the laminated glazing differ in mechanical properties by at least 10% in stiffness as compared to the non-deployment areas A2 wherein the mechanical properties are defined as average storage modulus G' at 1 Hz, 3 K/min and 50 °C measured according to the method described in the description and wherein the average storage modulus G' of the areas of deployment A1 is at least 10% higher than the average storage modulus G' of the areas of non-deployment A2.

4. Deployable rollover protection system according to any of claims 1 to 3 **characterized in that** the average glass-transition temperature Tg of the areas of deployment A1 measured according to the method described in the description is at least 10% higher than the average Tg the areas of non-deployment A2.

5. Deployable rollover protection system according to any of claims 1 to 4 **characterized in that** the adhesive film comprises at least one polyvinyl acetal resin and at least one plasticizer and wherein the plasticizer content in the areas of deployment A1 and areas of non-deployment A2 of the adhesive film is different.

6. Deployable rollover protection system according to claim 5 **characterized in that** the adhesive film comprises at least one polyvinyl acetal resin and at least one plasticizer and wherein the plasticizer content in the areas of deployment A1 is lower than in the areas of non-deployment A2.

7. Deployable rollover protection system according to any of claims 1 to 6 **characterized in that** the adhesive film has in the deployment areas A1 a different adhesion level to at least one sheet of glass than in the non-deployment areas.

8. Deployable rollover protection system according claim 7 **characterized in that** the different adhesion of the adhesive film in the deployment areas A1 is provided by coating or printing the surface of the adhesive film with a compound affecting the adhesion to glass.

9. Deployable rollover protection system according to any of claims 1 to 8 **characterized in that** the at least one rollbar is deployed through the laminated glazing by a release system comprising a spring, an explosive charge, pneumatic means or a hydraulic means.

10. Deployable rollover protection system according to any of claims 1 to 9 **characterized in that** the laminated glazing is a rear window of a car.

11. Method of producing the adhesive film for a deployable rollover protection system Deployable rollover protection system according to any of claims 1 to 10 **characterized by** producing an first adhesive film with areas of non-deployment A1 and areas of deployment A2 with identical mechanical properties and exchanging the areas of deployment A1 of the first adhesive film with a second adhesive film having different identical mechanical properties.

12. Method of producing the adhesive film according to claim 11 **characterized by** producing a first adhesive film and a second adhesive film; cutting out areas of deployment A1 of the first adhesive film and replacing the cut-out areas with the second adhesive film.
